# FASCICULE DE BREVET EUROPEEN

(11) **EP 3 552 975 B1**
(45) Date de publication et mention de la délivrance du brevet: **10.03.2021**
(21) Numéro de dépôt: 19167758.2
(22) Date de dépôt: 08.04.2019
(51) Int. Cl.: B64F 1/22

(54) **SYSTEME DE TRACTAGE D'UN AERONEF COMPRENANT UN DISPOSITIF AMELIORE DE COMMANDE DE DIRECTION DE L'AERONEF**
SCHLEPPSYSTEM FÜR EIN LUFTFAHRZEUG, DAS EINE VERBESSERTE RICHTUNGSSTEUERUNGSVORRICHTUNG FÜR DAS LUFTFAHRZEUG UMFASST
SYSTEM FOR TOWING AN AIRCRAFT COMPRISING AN IMPROVED DEVICE FOR CONTROLLING THE STEERING OF THE AIRCRAFT

(30) Priorité: 10.04.2018 FR 1853130
(43) Date de publication de la demande: 16.10.2019
(73) Titulaire: Airbus Operations SAS, 31060 Toulouse (FR); Airbus SAS, 31700 Blagnac (FR)
(72) Inventeur: GULLI, Christian, 31150 GAGNAC SUR GARONNE (FR); ROUSSEL, Patrick, 31770 COLOMIERS (FR); HUBERT, Patrick, 82000 MONTAUBAN (FR)
(74) Mandataire: Brevalex

(56) Documents cités:
- DE-A1- 1 481 999
- RU-C2- 2 302 979

## Description

### DOMAINE TECHNIQUE

La présente invention se rapporte au domaine du tractage d'aéronef, en particulier faisant suite à un événement anormal comme une sortie de piste. Dans un tel cas, il est habituellement requis la mise en œuvre d'un système de tractage spécifique, encore appelé outillage de désembourbement. De tels systèmes de tractage sont par exemple connus des documents DE 14 81 999 A1, et RU 2 302 979 C2.

L'invention s'applique au tractage des avions commerciaux et militaires.

### ETAT DE LA TECHNIQUE ANTERIEURE

Les systèmes de tractage d'aéronef comportent habituellement des élingues, permettant la traction sur les trains principaux d'atterrissage. Ces élingues sont généralement complétées par un dispositif de commande de direction de l'aéronef, raccordé à un train d'atterrissage avant et agencé entre les élingues. Ce dispositif de commande de direction est piloté par un opérateur, qui adapte l'orientation des roues du train avant en fonction de la direction de traction appliquée à l'aéronef par le véhicule de tractage, via les élingues.

En procédant de la sorte, l'opérateur situé entre les élingues de traction s'expose à des risques liés à l'éventuelle rupture de l'un des éléments participant à la mise en mouvement de l'aéronef, comme un câble, une manille, ou encore une élingue.

Il existe par conséquent un besoin d'optimisation des conceptions existantes, dans le but de réduire les risques inhérents à la présence humaine dans la zone située entre les élingues sous tension, durant le tractage de l'aéronef.

### EXPOSÉ DE L'INVENTION

Pour répondre à ce besoin, l'invention a tout d'abord pour objet un système de tractage d'un aéronef destiné à relier cet aéronef à au moins un véhicule tracteur, le système comprenant :
- une première élingue de traction comprenant une extrémité avant destinée à être raccordée au dit au moins un véhicule tracteur, ainsi qu'une extrémité arrière destinée à être raccordée à un premier train principal d'atterrissage situé d'un premier côté de l'aéronef ;
- une seconde élingue de traction de longueur identique à celle de la première élingue, la seconde élingue de traction comprenant une extrémité avant destinée à être raccordée au dit au moins un véhicule tracteur, ainsi qu'une extrémité arrière destinée à être raccordée à un second train principal d'atterrissage situé d'un second côté de l'aéronef opposé au premier côté ; et
- un dispositif de commande de direction de l'aéronef, destiné à être raccordé à un train d'atterrissage avant de l'aéronef, et agencé entre les première et seconde élingues de traction.

Selon l'invention, le dispositif de commande de direction comporte :
- un moyen central de raccord sur le train d'atterrissage avant, ce moyen central présentant une extrémité arrière destinée à être raccordée au train d'atterrissage avant ;
- un moyen latéral de commande de direction, ledit moyen latéral étant fixé sur le moyen central de raccord, et présentant une première extrémité latérale montée sur la première élingue de traction, ainsi qu'une seconde extrémité latérale opposée à la première, montée sur la seconde élingue de traction.

Grâce au raccordement des extrémités latérales du moyen latéral de commande de direction sur les élingues de traction, il est obtenu une liaison mécanique automatique et permanente entre la direction du train avant, et la direction des efforts de tractage s'exerçant dans les élingues. En d'autres termes, ce sont ces mêmes élingues de traction qui pilotent automatiquement le dispositif de commande de direction de l'aéronef, de sorte que la présence d'un opérateur dans la zone proche des élingues n'est plus requise. Les risques associés à cette présence deviennent alors inexistants.

L'invention prévoit de préférence au moins l'une des caractéristiques optionnelles suivantes, prises isolément ou en combinaison.

Les première et seconde extrémités latérales sont montées coulissantes le long de leurs élingues respectives.

Chacune des première et seconde extrémités latérales présente une poulie recevant l'élingue associée.

Chacune des première et seconde extrémités latérales est équipée d'un guide permettant de maintenir l'élingue associée au contact de la poulie.

Ledit moyen central de raccord comporte une barre longitudinale, et ledit moyen latéral de commande de direction comporte une barre transversale fixée sur la barre longitudinale à l'aide d'un moyen de fixation, les barres longitudinale et transversale étant de préférence orientées sensiblement orthogonalement l'une par rapport à l'autre.

Le moyen central de raccord comporte un dispositif de sécurité configuré pour rompre lorsqu'un effort latéral, transmis par le moyen latéral de commande de direction sur le moyen central de raccord, excède une valeur maximale prédéterminée.

L'extrémité arrière du moyen central de raccord comporte un connecteur de raccord sur le train d'atterrissage avant, le connecteur étant configuré pour interdire une rotation du moyen central de raccord relativement au train d'atterrissage avant, selon un axe longitudinal de ce moyen central de raccord.

Chacune des première et seconde élingues de traction est équipée d'un dispositif de mesure d'un effort de traction au sein de l'élingue, de préférence un dynamomètre, les deux dispositifs étant indépendants l'un de l'autre.

L'extrémité arrière de chacune des première et seconde élingues de traction est équipée d'un connecteur configuré pour coulisser le long d'une sangle de raccord destinée à passer autour d'un essieu du train principal d'atterrissage associé, de part et d'autre d'une jambe de ce train d'atterrissage.

Le système de tractage comporte un dispositif de protection de roue de train d'atterrissage, agencé autour de ladite sangle de raccord.

Le système de tractage comporte un moyen de couplage mécanique entre au moins deux jambes indépendantes d'un même train principal d'atterrissage.

L'invention a également pour objet un procédé de tractage d'un aéronef à l'aide d'un tel système, ce procédé comportant les étapes suivantes :
- raccordement des première et secondes élingues de traction sur le véhicule tracteur ainsi que sur les premier et second trains principaux d'atterrissage, et raccordement du dispositif de commande de direction sur le train d'atterrissage avant ainsi que sur les première et seconde élingues de traction ;
- tractage de l'aéronef par déplacement du véhicule tracteur, traction au cours de laquelle le dispositif de commande de direction est orienté en fonction des efforts appliqués par les première et seconde élingues de traction sur les première et seconde extrémités latérales du moyen latéral de commande.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'une opération de tractage d'aéronef, à l'aide d'un système de tractage selon l'invention ;
- la figure 2 représente une vue de dessus d'un système de tractage, selon un mode de réalisation préféré de l'invention ;
- la figure 2a représente une vue de dessus d'une partie du système de tractage montré sur la figure précédente ;
- la figure 3 représente une vue de dessus d'une autre partie du système de tractage montré sur la figure 2 ;
- la figure 4 est une vue en coupe prise le long de la ligne IV-IV de la figure 3 ;
- la figure 5 est une vue schématique en perspective d'une partie d'un train d'atterrissage avant de l'aéronef, sur lequel le système de tractage est destiné à être raccordé ;
- la figure 6 est une vue en perspective d'une partie du système de tractage destiné à être raccordé sur le train d'atterrissage avant ;
- la figure 7 est une vue en perspective d'une sangle de raccord destinée à assurer le raccordement entre une élingue et un train principal d'atterrissage ;
- la figure 8 est une vue en perspective similaire à celle de la figure 7, avec la sangle de raccord équipée d'un dispositif de protection de roue du train principal d'atterrissage ;
- la figure 9 représente une vue en perspective d'une partie du système de tractage, permettant de coupler mécaniquement des jambes indépendantes d'un même train principal d'atterrissage ;
- la figure 10 est une vue de dessus similaire à celle de la figure 2, dans une configuration de début de tractage de l'aéronef, avec le train d'atterrissage avant présentant une direction inclinée vers la gauche ; et
- la figure 11 est une vue de dessus similaire à celle de la figure 2, dans une configuration de tractage de l'aéronef telle qu'observée au cours d'un virage effectué par le véhicule tracteur.

### EXPOSÉ DÉTAILLÉ DE MODES DE RÉALISATION PRÉFÉRÉS

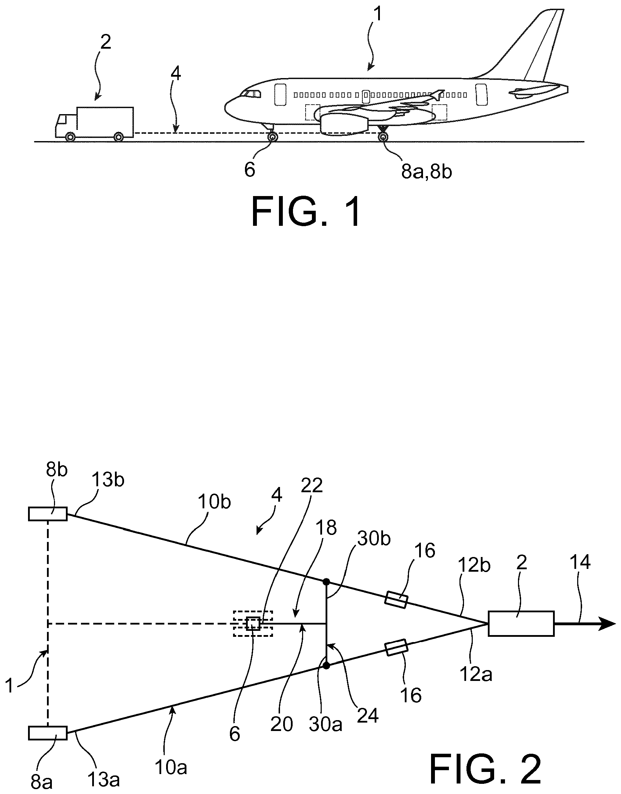

En référence tout d'abord à la figure 1, il est représenté une opération de tractage d'un aéronef 1, à l'aide d'un véhicule tracteur 2 et d'un système de tractage 4 selon l'invention. Le système de tractage 4 est interposé entre l'arrière du véhicule tracteur 2 et les différents trains d'atterrissage de l'aéronef, à savoir le train d'atterrissage avant 6 conçu pour commander la direction de roulage de l'aéronef, et deux trains principaux d'atterrissage 8a, 8b situés derrière le train avant 6.

Le système de tractage 4 est préférentiellement prévu pour assurer la récupération d'un aéronef embourbé, par exemple suite à une sortie de piste. Néanmoins, d'autres applications sont possibles, comme une opération normale de tractage sur sol dur.

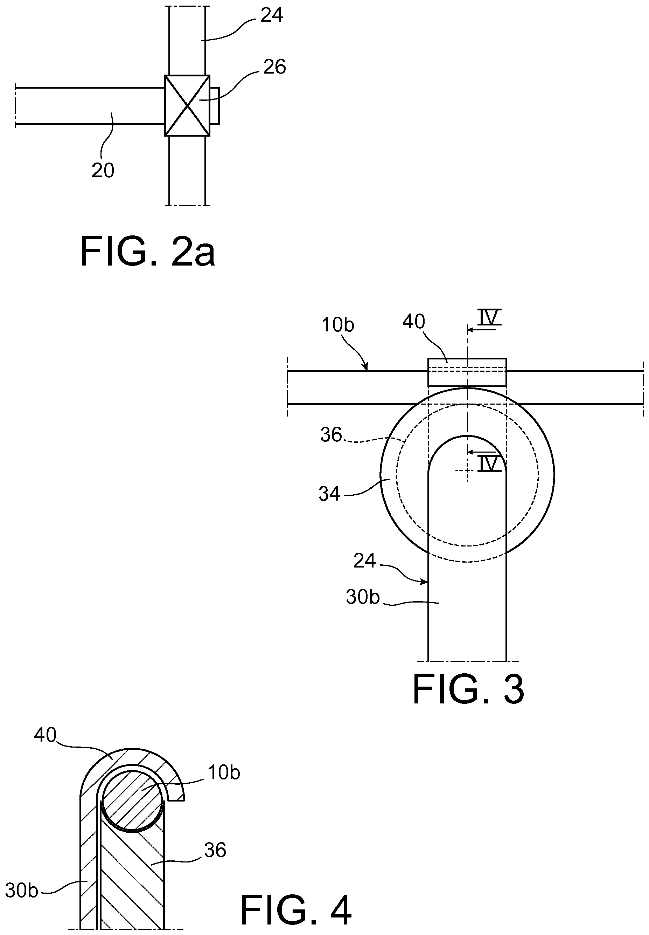

En référence à présent à la figure 2, il est montré la conception du système de tractage 4 selon un mode de réalisation préféré de l'invention, ce système 4 étant représenté durant une opération de tractage faisant par exemple suite à une sortie de piste de l'aéronef 1.

Le système 4 comporte tout d'abord une première élingue de traction 10a, sous forme de câble, chaîne, sangle, ou tout élément équivalent. Cette première élingue 10a comporte une extrémité avant 12a destinée à être raccordé sur le véhicule tracteur 2, ainsi qu'une extrémité arrière 13a destinée à être raccordée sur le train principal d'atterrissage 8a situé d'un premier côté de l'aéronef. Ce premier côté correspond au côté droit en regardant vers l'avant dans le sens d'avancement 14 de l'aéronef, au cours de l'opération de désembourbement.

De manière analogue, il est prévu une seconde élingue de traction 10b de même longueur que la première élingue 10a, également sous forme de câble, chaîne, sangle, ou tout élément équivalent. Cette seconde élingue 10b comporte une extrémité avant 12b destinée à être raccordé sur le véhicule tracteur 2, ainsi qu'une extrémité arrière 13b destinée à être raccordée sur le train principal d'atterrissage 8b situé d'un second côté de l'aéronef. Ce second côté, opposé au premier, correspond au côté gauche en regardant vers l'avant dans le sens d'avancement 14 de l'aéronef.

Dans ce mode de réalisation, les deux élingues de traction 10a, 10b sont montées connectées sur un même véhicule tracteur 2 (ou deux véhicules tracteurs le cas échéant), en restant de préférence indépendantes l'une de l'autre. En effet, il n'est préférentiellement pas prévu que les deux élingues 10a, 10b soient raccordées entre elles au niveau de leurs extrémités avant 12a, 12b, ni que celles-ci ne coulissent le long d'une même poulie fixée sur le véhicule tracteur 2. Ce type de configuration peut effectivement amener à faire pivoter l'aéronef de manière non souhaitée autour du train principal bloqué et embourbé dans le sol.

Ainsi, chaque extrémité avant 12a, 12b est de préférence équipée de son propre connecteur comme une manille, qui vient se monter sur un organe complémentaire agencé sur le véhicule tracteur 2. Selon une alternative envisagée, il est prévu deux véhicules tracteurs, chacun dédié à la traction de l'une des deux élingues 10a, 10b. Dans un tel cas, il est nécessaire de synchroniser l'avancement et la direction des deux véhicules.

Pour s'assurer de l'équilibrage des efforts transitant par les deux élingues, chacune d'elles est équipée d'un dispositif indépendant 16 de mesure d'un effort de traction au sein de l'élingue concernée. Ces dispositifs 16, qui prennent de préférence la forme de dynamomètres ou de tout autre dispositif équivalent, permettent non seulement de s'assurer que les efforts de traction transitant par les deux élingues sont relativement équilibrés, mais également de s'assurer que ces efforts appliqués aux deux trains principaux 8a, 8b n'excèdent pas une valeur limite susceptible d'endommager ces trains ou de causer une rupture des élingues.

Les deux élingues du système 4 sont complétées par un dispositif de commande de direction de l'aéronef, ce dispositif 18 étant agencé entre ces deux élingues 10a, 10b. Il comprend tout d'abord un moyen central 20 de raccord sur le train d'atterrissage avant 6, ce moyen central étant formé par une barre longitudinale, telle qu'une barre de traction dont l'extrémité arrière 22 est destinée à être raccordée au train d'atterrissage avant 6.

A l'extrémité avant de cette barre longitudinale 20, le dispositif de commande de direction 18 comporte un moyen latéral de commande de direction 24, formé par une barre transversale. Comme le montre la figure 2a, les deux barres 20, 24 sont fixées l'une sur l'autre à l'aide d'un moyen de fixation 26, et elles sont orientées sensiblement orthogonalement l'une par rapport à l'autre. Alternativement, la barre transversale 24 pourrait être une structure en forme de V, avec la pointe du V fixée sur la barre longitudinale 20. Toute autre forme pourrait également être envisagée, en présentant une symétrie par rapport à un plan vertical et longitudinal médian du dispositif 18. L'angle formé entre la barre longitudinale 20 et le moyen latéral de commande de direction 24 reste fixe. En outre, le raccordement du moyen 24 sur la barre longitudinale 20 pourrait être effectué à un autre endroit qu'à son extrémité avant, sans sortir du cadre de l'invention.

Préférentiellement, le dispositif de commande de direction 18 est monté sur roue dont la hauteur est réglable, pour conférer un appui sur le sol. De plus, chacune des deux barres 20, 24 est de préférence réglable en longueur, pour s'adapter à la longueur des élingues ainsi qu'à l'angle du V formé par celles-ci.

L'une des particularités de l'invention réside dans le fait que ce dispositif de commande de direction 18 est piloté par les élingues 10a, 10b. Pour ce faire, une première extrémité latérale 30a de la barre transversale 24 est montée sur la première élingue de traction 10a entre ses extrémités avant et arrière 12a, 13a, de même qu'une seconde extrémité latérale 30b, opposée à la première, est montée sur la seconde élingue de traction 10b entre ses extrémités avant et arrière 12b, 13b.

Ainsi, il est obtenu une liaison mécanique automatique et permanente entre la direction du train avant 6, et la direction des efforts de tractage s'exerçant dans les élingues 10a, 10b. Ce sont en effet ces mêmes élingues qui pilotent automatiquement l'orientation du dispositif de commande de direction 18, de sorte que la présence d'un opérateur dans la zone dangereuse entre les élingues n'est plus requise.

A titre indicatif, il est noté que les extrémités latérales 30a, 30b pourraient être raccordées différemment sur les élingues 10a, 10b, par exemple en étant solidarisées sur celles-ci à des points fixes symétriques de ces deux élingues.

En référence à présent aux figures 3 et 4, il est montré la nature du raccordement entre la seconde extrémité latérale 30b et la seconde élingue 10b, étant entendu qu'un même raccordement est prévu entre la première extrémité latérale 30a et la première élingue 10a.

L'extrémité latérale 30b porte une poulie 34, ou tout autre dispositif analogue, dont la gorge 36 reçoit l'élingue 10b. Grâce à ce montage, l'extrémité latérale 30b est ainsi montée coulissante de long de l'élingue 10b. De plus, pour maintenir l'élingue 10b dans la gorge 34 même lorsque cette élingue n'est plus en tension, l'extrémité latérale 30b est équipée d'un guide 40 agencé de sorte que l'élingue soit maintenue au contact de la poulie 34, enserrée entre le fond de la gorge 36 et ce même guide 40. Ce dernier, porté par l'extrémité latérale 30b, est ajustable afin de permettre l'introduction de l'élingue 10b dans la gorge 36, lors du montage du dispositif 18 opéré avant le tractage de l'aéronef.

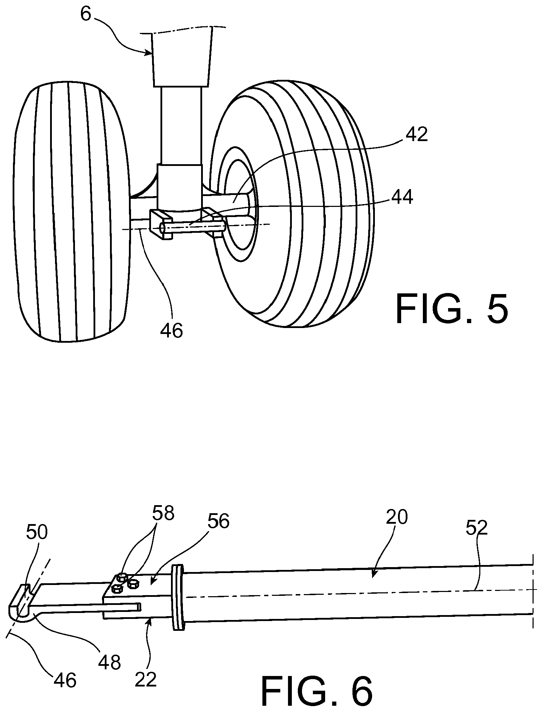

En référence à présent aux figures 5 et 6, il est prévu que le train avant 6 présente, à proximité d'un essieu 42, un organe allongé d'accouplement 44 s'étendant selon un axe transversal 46 parallèle à l'essieu. L'organe allongé d'accouplement 44 est prévu pour coopérer avec un connecteur de raccord 48 intégré à l'extrémité arrière 22 de la barre longitudinale 20. Ce connecteur 48 présente un logement 50 de forme complémentaire de celle de l'organe 44, en s'étendant selon le même axe transversal 46. Par conséquent, une fois accouplés, ces deux éléments 44, 50 interdisent la rotation du dispositif 18 selon un axe longitudinal 52 de la barre 20, mais ils autorisent une rotation du dispositif 18 selon l'axe transversal 46 de couplage entre le dispositif 18 et le train avant 6.

Toujours au niveau de l'extrémité arrière 22 de la barre longitudinale 20, cette extrémité comporte un dispositif de sécurité 56 agencé entre le connecteur de raccord 48, et l'autre partie de la barre 20. Le dispositif de sécurité 56 est configuré pour rompre lorsqu'un effort latéral, transmis par la barre transversale 24 sur la barre longitudinale 20, excède une valeur maximale prédéterminée. Il est par exemple formé par des boulons calibrés de cisaillement 58, agencés verticalement et traversant le connecteur 48 ainsi que l'autre partie de la barre 20. Cette particularité permet d'éviter d'introduire dans le train avant 6 des efforts susceptibles de l'endommager, en particulier au début du tractage dans le cas où ce train adopte une direction nécessitant un fort redressement. Le dispositif de sécurité 56 pourrait être implanté à tout autre endroit de la barre 20, sans sortir du cadre de l'invention.

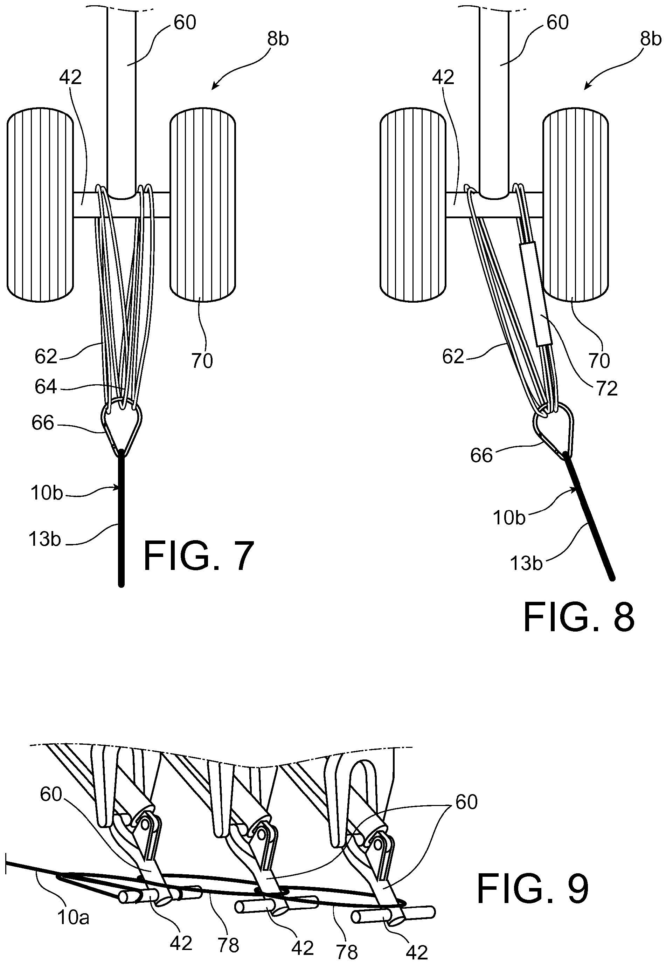

A présent en référence aux figures 7 et 8, il est représenté une partie du second train d'atterrissage principal 8b, montrant une jambe 60 portant l'essieu 42. Une sangle de raccord 62 passe autour de l'essieu 42, de part et d'autre de la jambe 60 en formant une boucle 64 traversée par un connecteur 66 en forme de manille, fixée à l'extrémité arrière 13b de la seconde élingue 10b. Ce connecteur 66 est prévu pour coulisser le long de la sangle de raccord 62, afin d'équilibrer en permanence les efforts transitant par les portions de cette sangle situées d'un côté de la jambe 60, et les portions de cette même sangle situées du côté opposé de la jambe 60.

Etant donné que l'angle de ces portions de sangle varie en fonction de la direction de traction appliquée par l'élingue 10b, il existe un risque que les roues 70 du train 8b entrent au contact de la sangle de raccord 62. Pour éviter tout risque d'endommagement, ces portions de sangle sont entourées d'un dispositif de protection de roue 72, montré sur la figure 8. Ce dispositif 72 peut par exemple prendre la forme d'un tube, souple ou semi-rigide, capable d'être mis en rotation autour des portions de sangle qui le portent, en étant entraîné par la roue en contact.

Bien évidemment, une telle sangle de raccord et son dispositif de protection de roue peuvent être mis en œuvre de manière identique ou similaire sur l'autre train d'atterrissage principal 8a.

Enfin, il est noté en référence à la figure 9 que lorsque les trains d'atterrissage principaux comportent plusieurs jambes 60 indépendantes les unes des autres, chacune piloté par un système de commande distinct et portant son propre essieu 42, il est alors préférentiellement prévu des moyens de couplage mécanique entre ces jambes 60. Plus précisément, un moyen de couplage mécanique 78 est prévu pour chaque ensemble de deux jambes indépendantes 60 directement consécutives au sein du même train, et ce afin de mieux répartir les efforts de traction introduits dans le train par l'élingue. Dans l'exemple représenté sur la figure 9 qui comprend trois jambes, il est prévu deux moyens de couplage 78, chacun sous forme de sangle entourant deux jambes directement consécutives 60.

Pour réaliser un tractage de l'aéronef à l'aide d'un véhicule tracteur 2 et d'un système de tractage 4 tel que celui qui vient d'être décrit, il est tout d'abord procédé au raccordement des extrémités des élingues 10a, 10b, ainsi qu'au raccordement du dispositif de commande de direction 18 sur le train avant 6, ainsi que sur les élingues.

Ensuite, l'étape de tractage de l'aéronef telle que schématisée sur la figure 2 est mise en œuvre par déplacement du véhicule tracteur 2, dans le sens d'avancement 14 correspondant à la direction de vol de l'aéronef. Comme mentionné précédemment, au cours de cette étape, le dispositif de commande de direction 18 est orienté en fonction des efforts appliqués par les première et seconde élingues 10a, 10b sur les première et seconde extrémités latérales 30a, 30b de la barre transversale 24. En particulier, lorsque le véhicule tracteur 2 conserve une direction d'avancement droite, les deux élingues 10a, 10b restent symétriques et appliquent des efforts latéraux d'intensités similaires aux extrémités opposées 30a, 30b de la barre transversale 24. De ce fait, la barre longitudinale 20 reste avantageusement parallèle à la direction d'avancement du véhicule tracteur 2, ce qui permet d'orienter au mieux le train avant 6 pendant le tractage.

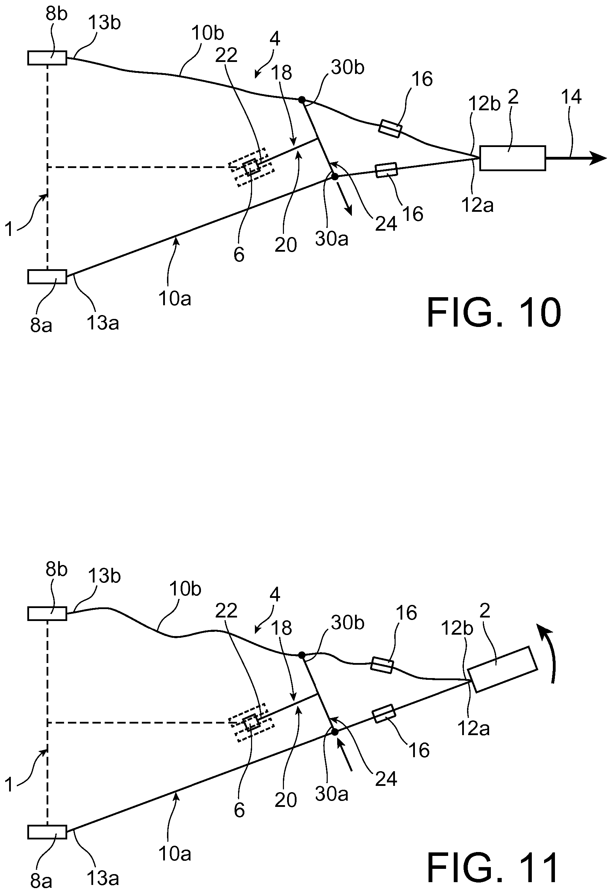

La figure 10 montre une configuration de début de tractage de l'aéronef, avec la particularité d'un train d'atterrissage avant 6 présentant une direction inclinée par rapport à la direction dans laquelle l'aéronef est censé être tracté. Dans cet exemple, la direction du train avant 6 est inclinée vers la gauche. Après assemblage du système de tractage 4, le déplacement vers l'avant du véhicule tracteur 2 a pour conséquence de tendre la première élingue 10a avant la seconde élingue 10b. Cette tension sur l'élingue 10a provoque un effort latéral sur la barre transversale 24 qui tend à déplacer celle-ci vers la droite, en redressant ainsi progressivement la direction du dispositif 18.

La figure 11 montre une autre configuration de tractage, telle qu'observée au cours d'un virage effectué par le véhicule tracteur 2, vers la gauche. Dans cette hypothèse, la première élingue 10a, située à l'extérieur par rapport au sens du virage, est maintenue sous tension alors que la seconde élingue intérieure 10b se détend. Par conséquent, un effort latéral est transmis à la première extrémité latérale 30a de la barre transversale 24, sans qu'un effort antagoniste ne se produise sur la seconde extrémité latérale 30b. Par conséquent, le dispositif de commande de direction 18 est forcé à pivoter vers la gauche, ce qui permet d'appliquer au train avant 6 une direction sensiblement similaire à celle du véhicule 2, à tout instant au cours du virage.

Cette opération de tractage s'effectue de préférence avec le système de direction de train avant désactivé, qui le rend libre en rotation, et ainsi facilement contrôlable par le dispositif 18 spécifique à l'invention. En effet, lors du tractage pour le désembourbement, l'aéronef peut ne pas être alimenté, créant ainsi une perte électrique, hydraulique, etc.

Bien entendu, diverses modifications peuvent être apportées par l'homme du métier à l'invention qui vient d'être décrite, uniquement à titre d'exemples non limitatifs, et dont la portée est définie par les revendications annexées.

## Revendications

1. Système de tractage (4) d'un aéronef destiné à relier cet aéronef (1) à au moins un véhicule tracteur (2), le système comprenant :
- une première élingue de traction (10a) comprenant une extrémité avant (12a) destinée à être raccordée au dit au moins un véhicule tracteur (2), ainsi qu'une extrémité arrière (13a) destinée à être raccordée à un premier train principal d'atterrissage (8a) situé d'un premier côté de l'aéronef ;
- une seconde élingue de traction (10b) de longueur identique à celle de la première élingue, la seconde élingue de traction comprenant une extrémité avant (12b) destinée à être raccordée au dit au moins un véhicule tracteur (2), ainsi qu'une extrémité arrière (13b) destinée à être raccordée à un second train principal d'atterrissage (8b) situé d'un second côté de l'aéronef opposé au premier côté ; et
- un dispositif de commande de direction (18) de l'aéronef, destiné à être raccordé à un train d'atterrissage avant (6) de l'aéronef, et agencé entre les première et seconde élingues de traction (10a, 10b),
**caractérisé en ce que** le dispositif de commande de direction (18) comporte :
- un moyen central (20) de raccord sur le train d'atterrissage avant (6), ce moyen central présentant une extrémité arrière (22) destinée à être raccordée au train d'atterrissage avant (6) ;
- un moyen latéral de commande de direction (24), le moyen latéral étant fixé sur le moyen central de raccord (20), et présentant une première extrémité latérale (30a) montée sur la première élingue de traction (10a), ainsi qu'une seconde extrémité latérale (30b) opposée à la première, montée sur la seconde élingue de traction (10b).

2. Système de traction selon la revendication 1, **caractérisé en ce que** les première et seconde extrémités latérales (30a, 30b) sont montées coulissantes le long de leurs élingues respectives (10a, 10b).

3. Système de traction selon la revendication 2, **caractérisé en ce que** chacune des première et seconde extrémités latérales (30a, 30b) présente une poulie (34) recevant l'élingue associée.

4. Système de traction selon la revendication 3, **caractérisé en ce que** chacune des première et seconde extrémités latérales (30a, 30b) est équipée d'un guide (40) permettant de maintenir l'élingue associée au contact de la poulie (34).

5. Système de tractage selon l'une quelconque des revendications précédentes, **caractérisé en ce que** ledit moyen central de raccord comporte une barre longitudinale (20), et en ce ledit moyen latéral de commande de direction comporte une barre transversale (24) fixée sur la barre longitudinale (20) à l'aide d'un moyen de fixation (26), les barres longitudinale et transversale (20, 24) étant de préférence orientées sensiblement orthogonalement l'une par rapport à l'autre.

6. Système de tractage selon l'une quelconque des revendications précédentes, **caractérisé en ce que** le moyen central de raccord (20) comporte un dispositif de sécurité (56) configuré pour rompre lorsqu'un effort latéral, transmis par le moyen latéral de commande de direction (24) sur le moyen central de raccord (20), excède une valeur maximale prédéterminée.

7. Système de tractage selon l'une quelconque des revendications précédentes, **caractérisé en ce que** l'extrémité arrière (22) du moyen central de raccord (20) comporte un connecteur de raccord (48) sur le train d'atterrissage avant (6), le connecteur (48) étant configuré pour interdire une rotation du moyen central de raccord (20) relativement au train d'atterrissage avant (6), selon un axe longitudinal (52) de ce moyen central de raccord (20).

8. Système de tractage selon l'une quelconque des revendications précédentes, **caractérisé en ce que** chacune des première et seconde élingues de traction (10a, 10b) est équipée d'un dispositif de mesure (16) d'un effort de traction au sein de l'élingue, de préférence un dynamomètre, les deux dispositifs (16) étant indépendants l'un de l'autre.

9. Système de tractage selon l'une quelconque des revendications précédentes, **caractérisé en ce que** l'extrémité arrière (13a, 13b) de chacune des première et seconde élingues de traction (10a, 10b) est équipée d'un connecteur (66) configuré pour coulisser le long d'une sangle de raccord (62) destinée à passer autour d'un essieu (42) du train principal d'atterrissage associé, de part et d'autre d'une jambe (60) de ce train d'atterrissage.

10. Système de tractage selon la revendication précédente, **caractérisé en ce qu'**il comporte un dispositif de protection (72) de roue de train d'atterrissage, agencé autour de ladite sangle de raccord (62).

11. Système de tractage selon l'une quelconque des revendications précédentes, **caractérisé en ce qu'**il comporte un moyen de couplage mécanique (78) entre au moins deux jambes indépendantes (60) d'un même train principal d'atterrissage.

12. Procédé de tractage d'un aéronef (1) à l'aide d'un système (4) selon l'une quelconque des revendications précédentes, **caractérisé en ce qu'**il comporte les étapes suivantes :
- raccordement des première et secondes élingues de traction (10a, 10b) sur le véhicule tracteur (2) ainsi que sur les premier et second trains principaux d'atterrissage (8a, 8b), et raccordement du dispositif de commande de direction (18) sur le train d'atterrissage avant (6) ainsi que sur les première et seconde élingues de traction (10a, 10b) ;
- tractage de l'aéronef par déplacement du véhicule tracteur (2), traction au cours de laquelle le dispositif de commande de direction (18) est orienté en fonction des efforts appliqués par les première et seconde élingues de traction (10a, 10b) sur les première et seconde extrémités latérales (30a, 30b) du moyen latéral de commande (24).

## Patentansprüche

1. Schleppsystem (4) für ein Flugzeug, das dazu bestimmt ist, dieses Flugzeug (1) mit zumindest einem Schleppfahrzeug (2) zu verbinden, wobei das System Folgendes umfasst:
- eine erste Schleppschlinge (10a) mit einem vorderen Ende (12a), das dazu bestimmt ist, mit dem zumindest einen Schleppfahrzeug (2) verbunden zu sein, und einem hinteren Ende (13a), das dazu bestimmt ist, mit einem ersten Hauptfahrwerk (8a), das sich auf einer ersten Seite des Flugzeugs befindet, verbunden zu sein;
- eine zweite Schleppschlinge (10b) von derselben Länge wie die erste Schlinge, wobei die zweite Schleppschlinge ein vorderes Ende (12b), das dazu bestimmt ist, mit dem zumindest einen Schleppfahrzeug (2) verbunden zu sein, und ein hinteres Ende (13b), das dazu bestimmt ist, mit einem zweiten Hauptfahrwerk (8b), dass sich auf einer zweiten Seite des Flugzeugs gegenüber der ersten Seite befindet, verbunden zu sein, umfasst; und
- eine Vorrichtung (18) zur Steuerung der Richtung des Flugzeugs, die dazu bestimmt ist, mit einem Bugfahrwerk (6) des Flugzeugs verbunden zu sein, und zwischen der ersten und der zweiten Schleppschlinge (10a, 10b) angeordnet ist,
**dadurch gekennzeichnet, dass** die Richtungssteuervorrichtung (18) Folgendes aufweist:
- ein zentrales Mittel (20) zur Verbindung mit dem Bugfahrwerk (6), wobei das zentrale Mittel ein hinteres Ende (22) aufweist, das dazu bestimmt ist, mit dem Bugfahrwerk (6) verbunden zu sein;
- ein seitliches Richtungssteuerungsmittel (24), wobei das seitliche Mittel am zentralen Verbindungsmittel (20) befestigt ist und ein an der ersten Schleppschlinge (10a) montiertes erstes seitliches Ende (30a) und ein gegenüberliegendes, an der zweiten Schleppschlinge (10b) montiertes zweites seitliches Ende (30b) aufweist.

2. Schleppsystem nach Anspruch 1, **dadurch gekennzeichnet, dass** das erste und das zweite seitliche Ende (30a, 30b) entlang ihrer jeweiligen Schlingen (10a, 10b) verschiebbar montiert sind.

3. Schleppsystem nach Anspruch 2, **dadurch gekennzeichnet, dass** sowohl das erste als auch das zweite seitliche Ende (30a, 30b) eine Rolle (34) zur Aufnahme der jeweiligen Schlinge aufweisen.

4. Schleppsystem nach Anspruch 3, **dadurch gekennzeichnet, dass** sowohl das erste als auch das zweite seitliche Ende (30a, 30b) mit einer Führung (40) versehen sind, die es ermöglicht, die jeweilige Schlinge in Kontakt mit der Rolle (34) zu halten.

5. Schleppsystem nach einem der vorangehenden Ansprüche, **dadurch gekennzeichnet, dass** das zentrale Verbindungsmittel eine Längsstange (20) aufweist und dass das seitliche Richtungssteuerungsmittel eine mit Hilfe eines Befestigungsmittels (26) an der Längsstange (20) befestigte Querstange (24) aufweist, wobei die Längs- und die Querstange (20, 24) vorzugsweise im Wesentlichen senkrecht zueinander ausgerichtet sind.

6. Schleppsystem nach einem der vorangehenden Ansprüche, **dadurch gekennzeichnet, dass** das zentrale Verbindungsmittel (20) eine Sicherheitsvorrichtung (56) aufweist, die so konfiguriert ist, dass sie bricht, wenn eine seitliche Kraft, die vom seitlichen Richtungssteuerungsmittel (24) auf das zentrale Verbindungsmittel (20) übertragen wird, einen vorbestimmten Höchstwert überschreitet.

7. Schleppsystem nach einem der vorangehenden Ansprüche, **dadurch gekennzeichnet, dass** das hintere Ende (22) des zentralen Verbindungsmittels (20) einen Kupplungsverbinder (48) am Bugfahrwerk (6) aufweist, wobei der Verbinder (48) so konfiguriert ist, dass er eine Drehung des zentralen Verbindungsmittels (20) relativ zum Bugfahrwerk (6) um eine Längsachse (52) des zentralen Verbindungsmittels (20) verhindert.

8. Schleppsystem nach einem der vorangehenden Ansprüche, **dadurch gekennzeichnet, dass** sowohl die erste als auch die zweite Schleppschlinge (10a, 10b) mit einer Vorrichtung (16) zum Messen einer Zugkraft innerhalb der Schlinge, vorzugsweise einem Dynamometer, ausgestattet sind, wobei die beiden Vorrichtungen (16) voneinander unabhängig sind.

9. Schleppsystem nach einem der vorangehenden Ansprüche, **dadurch gekennzeichnet, dass** das hintere Ende (13a, 13b) sowohl der ersten als auch der zweiten Schleppschlinge (10a, 10b) mit einem Verbinder (66) ausgestattet ist, der so konfiguriert ist, dass er entlang eines Verbindungsgurts (62) gleitet, der dazu bestimmt ist, um eine Achse (42) des zugehörigen Hauptfahrwerks auf jeder Seite eines Beins (60) dieses Fahrwerks herum zu verlaufen.

10. Schleppsystem nach dem vorangehenden Anspruch, **dadurch gekennzeichnet, dass** es eine Vorrichtung (72) zum Schützen des Fahrwerkrads umfasst, die um den Verbindungsgurt (62) herum angeordnet ist.

11. Schleppsystem nach einem der vorangehenden Ansprüche, **dadurch gekennzeichnet, dass** es ein mechanisches Kopplungsmittel (78) zwischen zumindest zwei unabhängigen Beinen (60) desselben Hauptfahrwerks aufweist.

12. Verfahren zum Schleppen eines Flugzeugs (1) mit Hilfe eines Systems (4) nach einem der vorangehenden Ansprüche, **dadurch gekennzeichnet, dass** es die folgenden Schritte aufweist:
- Verbinden der ersten und der zweiten Schleppschlinge (10a, 10b) mit dem Schleppfahrzeug (2) sowie mit dem ersten bzw. zweiten Hauptfahrwerk (8a, 8b) und Verbinden der Richtungssteuerungsvorrichtung (18) mit dem Bugfahrwerk (6) sowie mit der ersten und der zweiten Schleppschlinge (10a, 10b);
- Ziehen des Flugzeugs durch Bewegen des Schleppfahrzeugs (2), wobei während des Schleppens die Richtungssteuerungsvorrichtung (18) in Abhängigkeit von den Kräften ausgerichtet wird, die von der ersten und der zweiten Schleppschlinge (10a, 10b) auf das erste bzw. das zweite seitliche Ende (30a, 30b) des seitlichen Steuermittels (24) ausgeübt werden.

## Claims

1. Towing system (4) for an aircraft, designed to connect this aircraft (1) to at least one towing vehicle (2), the system comprising:
- a first towing sling (10a) comprising a front end (12a) that is designed to be connected to said at least one towing vehicle (2), and a rear end (13a) that is designed to be connected to a first main landing gear (8a) located on a first side of the aircraft;
- a second towing sling (10b) of length identical to that of the first sling, the second towing sling comprising a front end (12b) that is designed to be connected to the said at least one towing vehicle (2), and a rear end (13b) that is designed to be connected to a second main landing gear (8b) located on a second side of the aircraft, opposite the first side; and
- a device (18) for controlling the direction of the aircraft, which device is designed to be connected to a front landing gear (6) of the aircraft, and arranged between the first and second towing slings (10a, 10b),
**characterized in that** the direction control device (18) comprises:
- a central means (20) for connecting to the front landing gear (6), this central means having a rear end (22) that is designed to be connected to the front landing gear (6);
- a lateral direction control means (24), the lateral means being attached to the central connecting means (20), and having a first lateral end (30a) that is mounted on the first towing sling (10a), and a second lateral end (30b) that is opposite the first and is mounted on the second towing sling (10b).

2. Towing system according to Claim 1, **characterized in that** the first and second lateral ends (30a, 30b) are mounted so as to be able to slide along their respective slings (10a, 10b).

3. Towing system according to Claim 2, **characterized in that** each of the first and second lateral ends (30a, 30b) has a pulley (34) that receives the associated sling.

4. Towing system according to Claim 3, **characterized in that** each one of the first and second lateral ends (30a, 30b) is equipped with a guide (40) by means of which the associated sling can be kept in contact with the pulley (34).

5. Towing system according to any one of the preceding claims, **characterized in that** said central connecting means comprises a longitudinal bar (20), and **in that** said lateral direction control means comprises a transverse bar (24) attached to the longitudinal bar (20) by a fastening means (26), the longitudinal and transverse bars (20, 24) being preferably oriented essentially orthogonally with respect to one another.

6. Towing system according to any one of the preceding claims, **characterized in that** the central connecting means (20) comprises a safety device (56) that is configured to break when a lateral force, transmitted by the lateral direction control means (24) to the central connecting means (20), exceeds a predetermined maximum value.

7. Towing system according to any one of the preceding claims, **characterized in that** the rear end (22) of the central connecting means (20) comprises a connector (48) for connecting to the front landing gear (6), the connector (48) being configured to prevent rotation of the central connecting means (20) relative to the front landing gear (6), along a longitudinal axis (52) of this central connecting means (20).

8. Towing system according to any one of the preceding claims, **characterized in that** each one of the first and second towing slings (10a, 10b) is equipped with a device (16) for measuring a towing force inside the sling, preferably a dynamometer, the two devices (16) being independent of one another.

9. Towing system according to any one of the preceding claims, **characterized in that** the rear end (13A, 13b) of each one of the first and second towing slings (10a, 10b) is equipped with a connector (66) configured to slide along a connecting strap (62) that is designed to wrap around and axle (42) of the associated main landing gear, on either side of a leg (60) of this landing gear.

10. Towing system according to the preceding claim, **characterized in that** it comprises a landing gear wheel protection device (72) that is arranged around said connecting strap (62).

11. Towing system according to any one of the preceding claims, **characterized in that** it comprises a mechanical coupling means (78) between at least two independent legs (60) of a given main landing gear.

12. Method for towing an aircraft (1) using a system (4) according to any one of the preceding claims, **characterized in that** it comprises the following steps:
- connecting first and second towing slings (10a, 10b) to the towing vehicle (2) and to the first and second main landing gears (8a, 8b), and connecting the direction control device (18) to the front landing gear (6) and to the first and second towing slings (10a, 10b);
- towing the aircraft by moving the towing vehicle (2), during which towing the direction control device (18) is oriented according to the forces applied by the first and second towing slings (10a, 10b) to the first and second lateral ends (30a, 30b) of the lateral control means (24).
